# EUROPÄISCHE PATENTSCHRIFT

(11) **EP 0 456 903 B1**
(45) Veröffentlichungstag und Bekanntmachung des Hinweises auf die Patenterteilung: **22.02.1995**
(21) Anmeldenummer: 90124043.2
(22) Anmeldetag: 13.12.1990
(51) Int. Cl.: H04L 7/00, H04L 5/22, H04J 3/06

(54) **Verfahren und Anordnung zur Reduktion von Wartezeitjitter**
Method and arrangement for reduction of waiting time jitter
Procédé et dispositif de réduction de jitter à temps d'attente

(30) Priorität: 09.05.1990 DE 4014814
(43) Veröffentlichungstag der Anmeldung: 21.11.1991
(73) Patentinhaber: ANT Nachrichtentechnik GmbH, D-71522 Backnang (DE)
(72) Erfinder: Nawrocki, Rainer, Dr.-Ing., W-2000 Hamburg 20 (DE); Brünle, Siegfried, Dipl.-Ing., W-7300 Esslingen (DE); Ehrlich, Wolfgang, Dipl.-Ing., W-7151 Allmersbach/Tal (DE)

(56) Entgegenhaltungen:
- US-A- 4 764 941
- US-A- 4 920 547
- FREQUENZ, Band 32, Nr. 10, Oktober 1978, Berlin, DE; F.Kühne, K. Lang: "Positiv-Null-Negativ-Stopftechnik für die Multiplexübertragung plesiochroner Datensignale" Seiten 281-287
- THE BELL SYSTEM TECHNICAL JOURNAL, Band 51, Nr. 1, Januar 1972, US; D.L. Duttweiler: "Waiting Time Jitter"; Seiten 165-207
- GLOBECOM '87, W.D. Grover, T.E. Moore, J.A. McEachern: "Waiting Time Jitter Reduction by Synchronizer Stuff Threshold Modulation" - Seiten 514-518
- DIGITALE VERMITTLUNGSTECHNIK, 1981, R. Oldenbourg Verlag München Wien, H. Besier, P. Heuer, G. Kettler, Seiten 137-144

## Beschreibung

Die Erfindung betrifft ein Verfahren zur Reduktion von Wartezeitjitter, das von einer Datenübertragung mit Stopfverfahren ausgeht, und eine Anordnung zur Reduktion von Wartezeitjitter.

Wenn ein gegebenes Digitalsignal mit einer anderen als mit seiner ursprünglichen Bitrate übertragen werden soll, dann wird das Verfahren des Impulsstopfens eingesetzt. Es wird insbesondere dann angewandt, wenn plesiochrone Signale im Zeitmultiplex in Multiplexgeräten gebündelt werden bzw. wenn die inverse Funktion in einem Demultiplexer ausgeführt wird und wenn, beispielsweise zum Zwecke der Synchronisierung, ein Signal mit einer ersten Bitrate in einen Durchschalterahmen mit einer zweiten, höheren Bitrate abgebildet wird. Dieser Vorgang, der zumeist nach einer Vorschrift abläuft, wird im folgenden als Mappen und der inverse Vorgang als Demappen bezeichnet.

Im wesentlichen sind zwei Varianten des Impulsstopfens bekannt: das Positiv-Stopfen und das Postitiv-Null-Negativ-Stopfen. Beim Demultiplexen oder Demappen muß der Stopfvorgang wieder rückgängig gemacht werden, um das ursprüngliche Digitalsignal rückzugewinnen. Ein wichtiger Punkt ist dabei die Taktrückgewinnung. Dabei wird der Takt nur unvollkommen geglättet. Er unterscheidet sich von dem ursprünglichen Takt durch eine Phasenmodulation, den Jitter. Der Wartezeitjitter ist ein niederfrequenter Phasenjitter, der grundsätzlich immer dann auftritt, wenn asynchrone Digitalsignale mittels Impulsstopfens synchronisiert werden.

Aus Duttweiler D.L., "Waiting Time Jitter", The Bell System Technical journal, Vol. 51, No. 1, 1972, S. 165 - 207 sind eine Herleitung des Wartezeitjitters und experimentelle Daten zum Spektrum des Wartezeitjitters bekannt. Ein Synchronisierer und ein Desynchronisierer für Positiv-Stopfen werden beschrieben.

Der Wartezeitjitter beim Positiv-Null-Negativ-Stopfen wird im Artikel von Kühne F., Lang K., "Positiv-Null-Negativ-Stopftechnik für Multiplexübertragung plesiochroner Datensignale", Frequenz, Band 32 Nr. 10, 1978, Seite 281 - 287 behandelt. Aus dieser Druckschrift ist es bekannt in einem Synchronisierer ein Eingangssignal D mit einem Takt T in einen elastischen Speicher einzuschreiben, wobei die Adressierung mit einem Zähler Z1 erfolgt, der mit dem Takt T weitergeschaltet wird. In einer Steuerschaltung wird ein Auslesetakt erzeugt, der einen Zähler Z2 weiterschaltet mit dem die Adressierung zum Auslesen des elastischen Speichers erfolgt. Ein Phasenvergleicher P vergleicht die Zähler Z1 und Z2. Die Phasendifferenz ist ein Maß für den Füllstand des elastischen Speichers. Über- oder unterschreitet sie eine obere bzw. untere Schwelle, so wird bei der nächsten Gelegenheit ein Stopfvorgang ausgeführt. Die Vorgänge zur Rückgewinnung des Signals D verlaufen im wesentlichen umgekehrt. Im Desynchronisierer sind wiederum zwei Zähler und ein Phasenvergleicher vorgesehen. Zur Rückgewinnung des Taktes T wird, solange nicht gestopft wird, der Takt des Hauptkanals des Eingangssignals verwendet. Nach einem Stopfvorgang wird für ein Ausgleichszeitintervall ein etwas langsamerer oder ein etwas schnellerer Takt als Auslesetakt eingeschaltet.

Das Problem des Wartezeitjitters beim Positiv-Null-Stopfen und wie dieser reduziert werden kann, wird in der Veröffentlichung von Grover W.D., Moore T.E., Mc Eachern J.A. "Waiting Time Jitter Reduction by Synchronizer Stuff Threshold Modulation", GLOBECOM'87, 13.7.1, S. 514 - 518 erläutert. Zur Reduktion des Wartezeitjitters werden zusätzliche Stopfvorgänge im Synchronisierer vorgesehen, wobei diese zusätzlichen Stopfvorgänge in einer solchen Sequenz erfolgen, daß der Effekt eine Frequenzverschiebung des Jitters ist. Zur Anwendung dieses Verfahrens ist es nur notwendig im Synchronisierer eine neue Steuerung dafür vorzusehen, wann gestopft werden soll. Während bisher immer dann gestopft wurde, wenn konstante Schwellen über- oder unterschritten waren, werden im vorliegenden Fall die schwellen moduliert.

Der Erfindung liegt die Aufgabe zugrunde, ein Verfahren anzugeben, mit dem der Wartezeitjitter reduziert werden kann. Außerdem ist es Aufgabe der Erfindung eine Anordnung anzugeben, die zur Reduktion von Wartezeitjitter geeignet ist.

Die Aufgabe wird bezüglich des Verfahrens mit den Merkmalen des Patentanspruches 1 und bezüglich der Anordnung mit den Merkmalen des Patentanspruches 12 gelöst. Vorteilhafte Weiterbildungen sind in den Unteransprüchen angegeben.

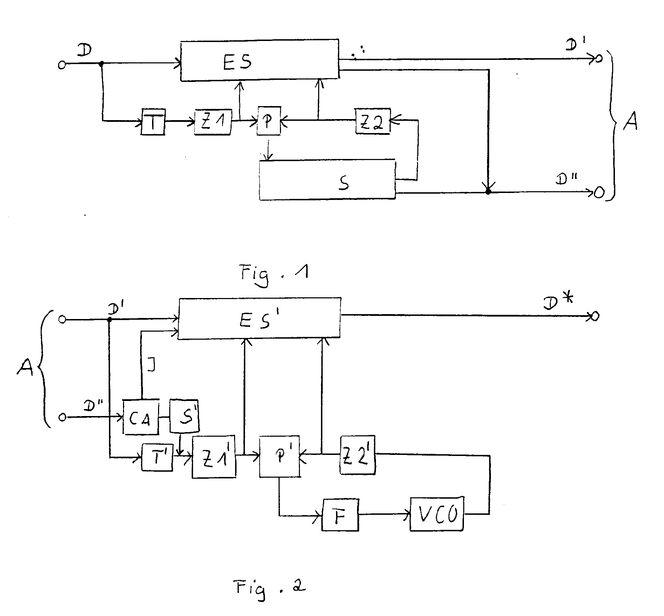

Zunächst soll anhand der Figuren 1 und 2 ein aus dem Stand der Technik bekannter Synchronisierer bzw. Desynchronisierer und das zugehörige Stopfverfahren beschrieben werden. Das Eingangssignal des Synchronisierers ist das Signal D mit dem Takt T. Das Ausgangssignal des Synchronisierers besteht aus einem Hauptsignal D′ und einem Hilfskanal D˝. Das ursprüngliche Signal D wird in den elastischen Speicher ES eingeschrieben, wobei die Adressierung mit dem Schreibzähler Z1, der mit dem Takt T zählt, erfolgt. Ein Auslesetakt, mit dem die Daten aus dem elastischen Speicher ES ausgelesen werden, wird in der Steuereinheit S erzeugt und dem Lesezähler Z2 zugeführt. Weichen die mittleren Bitraten der Signale D und D′ voneinander ab, so sind Stopfvorgänge erforderlich. Ein Phasenvergleicher P vergleicht die Phasen von Schreibzähler Z1 und Lesezähler Z2. Weicht die Phasendifferenz um einen bestimmten Wert von einem Sollwert ab, so veranlaßt die Steuerschaltung S einen Stopfvorgang. Beim Positiv-Stopfen wird an einer definierten Stelle ein Stopfbit in das Signal D′ übernommen. Beim Negativ-Stopfen wird ein zusätzliches Informationsbit aus dem elastischen Speicher im Hilfskanal D˝ übertragen. Die Information, ob in einem stopfbaren Zeitabschnitt ein Nutzinformationsbit oder ein Stopfbit übertragen wird (positive Stopfstelle), oder ob in dem Hilfskanal D˝ ein Informationsbit übertragen wird (negative Stopfstelle), wird in bestimmten Zeitabschnitten, den sogenannten Stopfinformationsbits des Hilfskanals D˝, übertragen.

Die Signale D′ und D˝ werden in einem Rahmen zum Signal A zusammengefaßt.

Die Eingangssignale des Desynchronisierers sind das Hauptsignal D′ und der Hilfskanal D˝. Das Ausgangssignal ist das rückgewonnene Datensignal D*, das sich dadurch vom Eingangssignal des Synchronisierers unterscheidet, daß es mit einem Wartezeitjitter behaftet ist. Die Vorgänge zur Rückgewinnung des Signals D verlaufen im wesentlichen umgekehrt, wie die beschriebenen Vorgänge in der Anpassung. Wird anhand der Stopfinformationsbits im Codewortauswerter CA erkannt, daß gestopft wurde, so gibt die Steuerschaltung S′ entweder einen Zusatzimpuls ab, der das im Hilfskanal D˝ empfangene Informationsbit I in den elastischen Speicher ES′ einschreibt (Negativ-Stopfvorgang) oder die Steuerschaltung S′ unterdrückt einen Taktimpuls, so daß das Stopfbit aus dem Signal D′ nicht in den elastischen Speicher eingeschrieben wird (Positiv-Stopfvorgang). Zur Gewinnung des Auslesetaktes, mit dem der Lesezähler Z2′ betätigt wird, kann beispielsweise eine PLL-Schaltung vorgesehen werden. Mit dieser wird das Ausgangssignal des Phasenvergleichers P′, der die Phase des Schreibzählers Z1′ mit der des Lesezählers Z2′ vergleicht, in einem Filter F gefiltert und der gefilterte Wert einem spannungsgeregelten Oszillator VCO zugeführt, der den Lesetakt erzeugt.

Die gemessene Phasendifferenz zwischen den Phasen von Schreibzähler Z1 und Lesezähler Z2 entspricht dem Füllstand des elastischen Speichers ES.

Die Phaseninformation - gegeben durch die Änderung des mittleren Füllstandes des elastischen Speichers - kann nur in 1-bit-Schritten mittels der Stopfinformation vom Synchronisierer zum Desynchronisierer übertragen werden. Hierdurch kann beim gewöhnlichen Positiv-Null-Negativ-Stopfen ein hoher Wartezeitjitter auftreten.

Die Erfindung ist von folgenden Voraussetzungen ausgegangen: Ein Signal D soll in ein Signal A gemappt werden. Die Signale A und D können Frequenzschwankungen aufweisen, die durch den elastischen Speicher ES nicht aufgefangen werden können, so daß im Signal A gestopft werden muß. Im Rahmen des Signals A steht ausreichend freier Platz zur Verfügung, so daß Zusatzinformationen übertragen werden können.

Bei dem erfindungsgemäßen Verfahren wird der Füllstand des elastischen Speichers im Synchronisierer an mehreren Zeitpunkten innerhalb des Rahmens des Signals A, den Stützstellen, bestimmt. Die Werte werden aufakkumuliert, also ein mittlerer Füllstand bestimmt. Der aufakkumulierte Wert wird als Zusatzinformation zum Desynchronisierer übertragen. Dort wird an den gleichen Stützstellen im Rahmen des Signals A der Füllstand des elastischen Speichers ES′ bestimmt und aufakkumuliert. Die PLL-Anordnung im Desynchronisierer wird mit dem Vergleichswert der aufakkumulierten Maße für den Füllstand des elastischen Speichers im Synchronisierer bzw. Desynchronisierer gesteuert. Für die Wahl der Stützstellen zur Bestimmung des Füllstandes des elastischen Speichers sind folgende Kriterien von Vorteil, um einen möglichst geringen Wartezeitjitter zu erhalten: Der zeitliche Abstand der Stützstellen sollte äquidistant sein. Die Zahl der Stützstellen sollte dem Nennwert der Bitrate des Signals A geteilt durch den größten gemeinsamen Teiler aus den Nennwerten der Bitraten des Signals D und des Signals A entsprechen. In diesem Fall entspricht der größte Wartezeitjitter dem Produkt aus dem ein- bis zweifachen der reziproken Anzahl der Stützstellen und dem maximalen Wartezeitjitter.

Es kann sinnvoll sein, die Akkumulation nicht mit jeder Bittaktperiode des Digitalsignals A durchzuführen und damit die Geschwindigkeit zur Verarbeitung zu verringern. Damit das Maß für den mittleren Füllstand von Synchronisierer und Desynchronisierer vergleichbar ist, muß die Akkumulation sich auf die gleiche Zahl von Summanden (Abtastwerten) beziehen und die Abtastwerte müssen die gleiche Lage im Rahmen des zweiten Digitalsignals A aufweisen.

Die Anforderungen an die PLL-Anordnung sind gering; es ist also eine relativ hohe Grenzfrequenz zulässig.

Das Verfahren zur Reduktion von Wartezeitjitter kann mit einem beliebigen Stopfverfahren, z. B. mit einem der in der Beschreibungseinleitung beschriebenen Stopfverfahren, kombiniert werden.

Zur Durchführung des Verfahrens ist es notwendig, den mittleren Füllstand des elastischen Speichers im Synchronisierer und im Desynchronisierer zu bestimmen. Die Schaltungen zur Ermittlung des mittleren Füllstandes sind im Synchronisierer und Desychronisierer vom Prinzip her identisch.

Anhand der Zeichnungen wird ein Ausführungsbeispiel der Erfindung erläutert. Es zeigen
- Figur 1: ein Synchronisierer gemäß dem Stand der Technik,
- Figur 2: ein bekannter Desynchronisierer,
- Figur 3: eine schematische Darstellung des Übertragungsweges,
- Figur 4: ein Blockschaltbild eines erfindungsgemäßen Synchronisierers und Desynchronisierers und
- Figur 5: einen Rahmenaufbau mit Zusatzinformation.

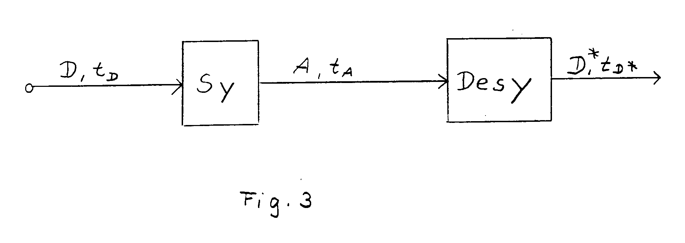

In Figur 3 ist dargestellt, daß ein erstes Digitalsignal D mit einer ersten Bitrate, die einem ersten Takt t_{D} entspricht, einem Sychronisierer Sy zugeführt wird. Vom Synchronisierer wird ein zweites Digitalsignal A mit einer zweiten Bitrate, die einem zweiten Takt t_{A} entspricht, dem Desynchronisierer Desy zugeführt. Im Desynchronisierer Desy soll das erste Digitalsignal D mit der ersten Bitrate regeneriert werden. Das Ausgangssignal des Desynchronisierers Desy, das rückgewonnene Signal D*, unterscheidet sich vom Digitalsignal D durch den Wartezeitjitter, mit dem der Takt t_{D}* des rückgewonnenen Signals D* behaftet ist. Die Bitraten der Digitalsignale D und A sind so gewählt, daß eine Übertragung des ersten Digitalsignales D im zweiten Digitalsignal A mittels Impulsstopftechnik ermöglicht wird.

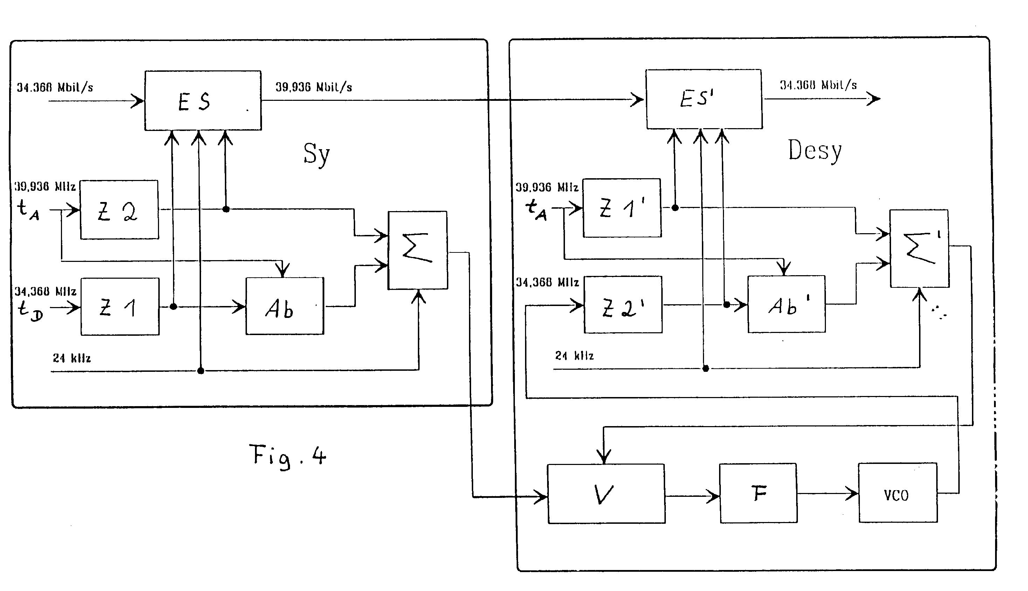

In Figur 4 ist für die Digitalsignale D und A ein Beispiel angegeben: Das Digitalsignal D weist dabei eine Bitrate von 34,368 Mbit/s und das Digitalsignal A eine Bitrate von 39,936 Mbit/s auf. Der prinzipielle Aufbau des Synchronisierers Sy und des Desynchronisierers Desy ist aus Figur 4 ersichtlich. Im Synchronisierer Sy wird einem elastischen Speicher ES das erste Digitalsignal D mit 34,368 Mbit/s zugeführt. Es wird mit dem Takt t_{D} von 34,368 MHz eingeschrieben. Dabei wird ein Zähler Z1 mit dem gleichen Takt t_{D} betätigt. Aus dem elastischen Speicher ES wird das Digitalsignal A ausgelesen. Dabei läuft ein Lesezähler Z2 mit, der immer dann um 1 weitergesetzt wird, wenn ein Bit aus dem elastischen Speicher ausgelesen wird. Da die Bitrate des Digitalsignals D kleiner als die des Digitalsignals A ist, erfolgt das Auslesen und somit auch das Zählen des Zählers Z2 mit Lücken. Der Lesezähler arbeitet mit einer Frequenz t_{A} von 39,936 MHz, weist aber manchmal beim Zählen, nämlich immer dann, wenn gestopft wird, "Aussetzer" oder "Sprünge" auf. Das Digitalsignal A wird in einem Rahmen mit einer Rahmenfrequenz von 8 KHz übertragen. Ein Rahmen weist drei Stopfrahmen auf, d.h. in jedem Rahmen des Digitalsignals A ist dreimal die Möglichkeit zum Stopfen gegeben. Der Stopfrahmen wiederholt sich also mit einer Frequenz von 24 KHz. Im Synchronisierer Sy ist eine Stopfeinheit vorgesehen, mit der nach einem beliebigen Verfahren gestopft werden kann. Die Einheit ist in Figur 4 nicht dargestellt. Zur Ermittlung des momentanen Füllstandes des elastischen Speichers ES wird der Schreibzähler Z1 mit dem Takt t_{A} von 39,936 MHz mittels einem Abtaster Ab abgetastet. Der Abtastwert wird mit dem Stand des Lesezählers Z2 in einem Vergleicher Σ verglichen. Der Vergleichswert ist ein Maß für den momentanen Füllstand des elastischen Speichers ES, der in ganzen Bit ermittelt wird. Zur Ermittlung des mittleren Füllstandes des elastischen Speichers ES, der einmal je Stopfrahmen übertragen werden soll, also mit einer Frequenz von 24 KHz, werden die Vergleichswerte in dem Vergleicher Σ aufakkumuliert. Für jeden Stopfrahmen wird eine neue Summe gebildet. Dabei ist es nicht notwendig alle Vergleichswerte als Summanden der Aufakkumulation vorzusehen. Es ist aber sinnvoll die Summanden äquidistant im Rahmen des Digitalsignals A zu verteilen. Im vorgegebenen Beispiel hat sich der Wert 208 als sinnvolle Summandenzahl herausgestellt. Neben der Information des Digitalsignals D wird im Rahmen des Digitalsignals A auch das Maß für den mittleren Füllstand einmal im Stopfrahmen übertragen. Die Übertragung dieses Maßes erfolgt als Zusatzinformation.

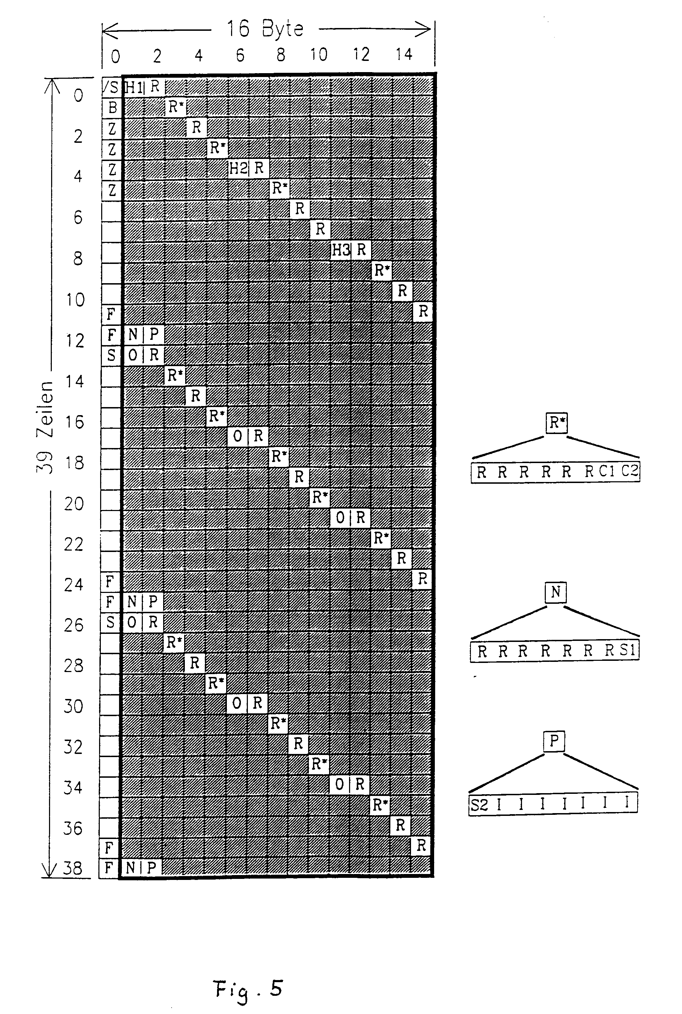

Der Rahmen des Digitalsignals A ist in Figur 5 dargestellt. Der Rahmen besteht aus 39 Zeilen die jeweils 16 Byte breit sind. In den schraffierten Feldern wird Information übertragen. Die Felder mit der Bezeichnung S enthalten Synchronworte. Im Feld mit der Bezeichnung P wird die Parität übertragen. Die Felder mit der Bezeichnung H1, H2 und H3 enthalten einen Pointer. Der Path-Overhead ist in den Feldern mit der Bezeichnung O enthalten. Ein festes Stopfbyte ist in den Feldern mit der Bezeichnung R* und R enthalten. Die Felder R* unterscheiden sich dadurch von den Feldern R, das in den Feldern R* zusätzlich Stopfkontrollbits enthalten sind. In den Feldern Z ist die Port-Adresse angegeben. Der Pufferfüllstand wird in der ersten Spalte jeweils in den beiden letzten Zeilen eines Stopfrahmens übertragen. Die Felder sind mit F gekennzeichnet. Die erste Spalte des Rahmens weist mehrere Felder auf, in denen kein Signal übertragen wird, die bei der Übertragung also Lücken entsprechen.

Das Digitalsignal A wird also in dem eben beschriebenen Rahmen zum Desynchronisierer Desy übertragen. Das Digitalsignal A wird teilweise in den elastischen Speicher ES′ eingeschrieben. Dabei läuft der Zähler Z1′ mit, der ein genaues Abbild des Zählers Z2 im Synchronisierer Sy ist. Es wird nicht das ganze Digitalsignal A in den elastischen Speicher ES′ eingeschrieben, sondern nur die Teile, die auch zum Digitalsignal D gehören. Die Synchronworte, der Pufferfüllstand und die Pointer werden beispielsweise nicht übernommen. Das Einschreiben erfolgt mit einer Frequenz t_{A} von 39,936 MHz, wenn man von den Lücken beim Einschreiben absieht. Das Digitalsignal D soll mit seiner ursprünglichen Bitrate wiedergewonnen werden. Dabei soll der Jitter in der Bitrate, der durch das Stopfen entstanden ist, möglichst gering gehalten werden. Das Ausgangssignal des Desynchronisierers ist das Signal D* dessen Taktes mit einem geringen Jitter behaftet ist. Die Einheit, die für das Entstopfen verantwortlich ist, ist in der Figur 4 nicht dargestellt. Im Desynchronisierer Desy wird der mittlere Füllstand des elastischen Speichers ES′ ebenso bestimmt, wie dies im Synchronisierer Sy geschehen ist. Dabei ist zu beachten, daß die Summanden zur Akkumulation des mittleren Füllstandes an den gleichen Stützstellen im Rahmen des Digitalsignals A gewonnen wurden, wie die Summanden im Synchronisierer Sy. So kann man gewährleisten, daß die mittleren Füllstände der elastischen Speicher ES und ES′ vergleichbar sind. Zur Rückgewinnung des Taktes für den Lesezähler Z2′ werden die mittleren Füllstände des elastischen Speichers ES′ und die übertragenen mittleren Füllstände des elastischen Speichers ES in einen Vergleicher V verglichen. Der Vergleichswert wird einem Filter F zugeführt und der gefilterte Wert regelt einen spannungsgeregelten Oszillator, der den ursprünglichen Takt t_{D} möglichst gut wiederherstellen soll. Der rückgewonnene Takt t_{D}*, der sich vom Takt t_{D} nur geringfügig unterscheidet, wird dann dem Zähler Z2′ zugeführt.

Durch das erfindungsgemäße Verfahren erreicht man eine Phasenmitführung im Desynchronisierer zur Wiederherstellung des ursprünglichen Taktes t_{D}.

## Patentansprüche

1. Verfahren zur Reduktion von Wartezeitjitter mit folgenden Verfahrensschritten:
a) ein erstes Digitalsignal (D) mit einer ersten Bitrate wird mit einem ersten Takt (t_{D}), der der ersten Bitrate entspricht, in einen elastischen Speicher (ES) eines Synchronisierers (Sy) eingeschrieben;
b) ein zweites Digitalsignal (A) mit einer zweiten Bitrate, die einem zweiten Takt (t_{A}) entspricht, und einem vorgegebenen Rahmen wird aus dem elastischen Speicher (ES) des Synchronisierers (Sy) ausgelesen;
c) im zweiten Digitalsignal (A) muß gestopft werden;
gekennzeichnet durch:
d) ein Maß für den mittleren Füllstand des elastischen Speichers (ES) wird bestimmt und im Rahmen des zweiten Digitalsignals (A) zu einem Desynchronisierer (Desy) übertragen;
e) im Desynchronisierer (Desy) wird ein Digitalsignal (D*) wieder gewonnen;
f) in einen elastischen Speicher (ES′) des Desynchronisierers wird der Teil des zweiten Digitalsignals (A) eingeschrieben, der dem im Synchronisierer (Sy) in das Digitalsignal (A) abgebildeten ersten Digitalsignal (D) entspricht;
g) zum Einschreiben eines Bits steht eine Periodendauer von der reziproken zweiten Bitrate des zweiten Digitalsingals (A) zur Verfügung;
h) das Digitalsignal (D*) wird aus dem elastischen Speicher (ES′) ausgelesen;
i) ein Maß für den mittleren Füllstand des elastischen Speichers (ES′) des Desynchronisierers (Desy) wird ermittelt, das mit dem Maß für den mittleren Füllstand des elastischen Speichers (ES) des Synchronisierers (Sy) vergleichbar ist;
k) in einen Vergleicher (V) wird das Maß für den mittleren Füllstand des elastischen Speichers (ES) des Synchronisierers (Sy), mit dem Maß für den mittleren Füllstand des elastischen Speichers (ES′) des Desynchronisierers (Desy) verglichen und ein Vergleichssignal gebildet;
l) das Vergleichssignal steuert einen Regelkreis, insbesondere einen Phasenregelkreis, der zur Rückgewinnung eines Taktes (t_{D}*) mit dem das Digitalsignal (D*) im Desynchronisierer (Desy) aus dem elastischen Speicher (ES′) ausgelesen wird, dient.

2. Verfahren zur Reduktion von Wartezeitjitter nach Anspruch 1, dadurch gekennzeichnet, daß das Maß für den mittleren Füllstand der elastischen Speicher (ES und ES′) aus dem Maß für den momentanen Füllstand des Speichers zu festen Zeitpunkten bezogen auf dem Rahmen des zweiten Digitalsignals (A) bestimmt wird.

3. Verfahren zur Reduktion von Wartezeitjitter nach Anspruch 2, dadurch gekennzeichnet, daß die Zeitpunkte, an denen das Maß für den momentanen Füllstand zur Ermittlung des Maßes für den mittleren Füllstand dient, in Synchronisierer (Sy) und Desynchronisierer (Desy) bezogen auf den Rahmen des zweiten Digitalsignals (A) an den gleichen Stellen liegen.

4. Verfahren zur Reduktion von Wartezeitfilter nach einem der Ansprüche 1 bis 3, dadurch gekennzeichnet, daß das Maß für den mittleren Füllstand des elastischen Speichers (ES) des Synchronisierers (Sy) einmal in jedem Stopfrahmen des Rahmens des zweiten Digitalsignals (A) zum Desynchronisierer (Desy) übertragen wird.

5. Verfahren zur Reduktion von Wartezeitjitter nach einem der Ansprüche 1 bis 4, dadurch gekennzeichnet, daß das Maß für den mittleren Füllstand der elastischen Speicher (ES, ES′) wie folgt ermittelt wird:
a) beim Schreiben des ersten Digitalsignals (D) in den elastischen Speicher (ES) des Synchronisierers (Sy) läuft ein Schreibzähler (Z1) mit dem Takt (t_{D}) mit und beim Lesen aus diesem Speicher (ES) läuft ein Lesezähler (Z2) mit, der immer dann weiterzählt, wenn ein Bit ausgelesen wird und beim Schreiben in den elastischen Speicher (ES′) des Desynchronisierers (Desy) läuft ein Schreibzähler (Z1′) mit, der ein genaues Abbild des Lesezählers (Z2) des Sychronisierers (Sy) ist und beim Lesen aus diesem Speicher (ES′) läuft ein Lesezähler (Z2′) mit dem Takt (t_{D}*) mit;
b) das Maß für den momentanen Füllstand der elastischen Speicher (ES, ES′) wird ermittelt, indem der Zähler, der mit dem ersten Takt (t_{D}) zählt (Z1), bzw. der Zähler (Z2′), der mit dem rückgewonnenen Takt (t_{D}*) zählt, mit dem zweiten Takt (t_{A}) abgetastet wird und die Abtastwerte mit dem jeweiligen Zählerstand des weiteren Zählers im Synchronisierer (Sy) bzw. Desynchronisierers (Desy) (Z2 bzw. Z1′) verglichen werden;
c) eine feste Anzahl von Werten für das Maß für den momentanen Füllstand wird akkumuliert und die Summe gibt das Maß für den mittleren Füllstand an.

6. Verfahren zur Reduktion von Wartezeitjitter nach Anspruch 5, dadurch gekennzeichnet, daß die Akkumulation des Maßes für den mittleren Füllstand schrittweise mit jeder n-ten Bittaktperiode des zweiten Digitalsignals (A) erfolgt.

7. Verfahren zur Reduktion von Wartezeitjitter nach Anspruch 5, dadurch gekennzeichnet, daß die Akkumulation des Maßes für den mittleren Füllstand durch einmalige Addition in jedem Stopfrahmen des Digitalsignals (A) erfolgt.

8. Verfahren zur Reduktion von Wartezeitjitter nach einem der Ansprüche 5 bis 7, dadurch gekennzeichnet, daß die Akkumulation des Maßes für den mittleren Füllstand durch Addition jedes m-ten Maßes für den momentanen Füllstand erfolgt.

9. Verfahren zur Reduktion von Wartezeitjitter nach einem der Ansprüche 1 bis 8, dadurch gekennzeichnet, daß positiv- oder positiv-null-negativ gestopft wird oder ein Stopfverfahren mit Schwellenmodulation eingesetzt wird.

10. Verfahren zur Reduktion von Wartezeitjitter nach einem der Ansprüche 1 bis 9, dadurch gekennzeichnet, daß die Entscheidung ob gestopft wird oder nicht, in Abhängigkeit vom jeweiligen Maß für den mittleren Füllstand des elastischen Speichers des Synchronisierers getroffen wird.

11. Anordnung zur Reduktion von Wartezeitjitter zur Durchführung des Verfahrens gemäß Anspruch 1 gekennzeichnet durch folgende Merkmale:
a) ein Synchronisierer (Sy) ist vorgesehen, der einen elastischen Speicher (ES), in den ein erstes Digitalsignal (D), das eine erste Bitrate aufweist, die einem ersten Takt (t^{D}) entspricht, eingeschrieben und aus dem ein zweites Digitalsignal (A), das eine zweite Bitrate aufweist, die einem zweiten Takt (T_{A}) entspricht, ausgelesen wird, einen Schreibzähler (Z1), der mit einem ersten Takt (t_{D}) zählt, einen Lesezähler (Z2), der beim Auslesen eines Bits weiterzählt, einen Abtaster (Ab), der den Schreibzähler (Z1) mit dem zweiten Takt (t_{A}) abtastet, und einen Vergleicher (Σ), der den Abtastwert des Standes des Schreibzählers (Z1) mit dem Stand des Lesezählers (Z2) vergleicht und die Vergleichswerte aufakkumuliert;
b) ein Desynchronisierer (Desy) ist vorgesehen, der einen elastischen Speicher (ES′), einen Schreibzähler (Z1′), der wie der Lesezähler (Z2) des Synchronisierers (Sy) zählt, einen Lesezähler (Z2′), einen Abtaster (Ab′), der den Stand des Lesezählers (Z2′) mit dem zweiten Takt (t_{A}) abtastet, einen Vergleicher (Σ′), der den Abtastwert des Standes des Lesezählers (Z2′) mit dem Stand des Schreibzählers (Z1′) vergleicht und die Vergleichswerte aufakkumuliert und einen zweiten Vergleicher (V), der die Ausgabe des Vergleichers (Σ) mit der des Vergleichers (Σ′) vergleicht, das Ergebnis einem Filter (F) zuführt, mit dem gefilterten Wert einen spannungsgeregelten Oszillator (VCO) regelt, der den Takt (t_{D}*) regeneriert, mit dem der Lesezähler (Z2′) zählt;
c) eine Übertragungsleitung, die den Synchronisierer (Sy) mit dem Desynchronisierer (Desy) verbindet und auf der das zweite Digitalsignal (A) mit der Ausgabe des Vergleichers (Σ) übertragen wird.

## Claims

1. A method of reducing waiting time jitter including the following method steps:
a) a first digital signal (D) having a first bit rate is written into an elastic memory (ES) of a synchronizer (Sy) with a first clock rate (t_{D}), which corresponds to the first bit rate;
b) a second digital signal (A) having a second bit rate that corresponds to a second clock rate (t_{A}), and having a given frame, is read out of the elastic memory (ES) of the synchronizer (Sy);
c) stuffing must take place in the second digital signal (A);
characterized in that:
d) a measure for the average fill level of the elastic memory (ES) is determined and transmitted in the frame of the second digital signal (A) to a desynchronizer (Desy);
e) a digital signal (D*) is recovered in the desynchronizer (Desy);
f) the part of the second digital signal (A) that corresponds to the first digital signal (D) mapped into the digital signal (A) in the synchronizer (Sy) is written into an elastic memory (ES′) of the desynchronizer;
g) a period duration of the reciprocal, second bit rate of the second digital signal (A) is provided for writing in a bit;
h) the digital signal (D*) is read out of the elastic memory (ES′);
i) a value is determined for the average fill level of the elastic memory (ES′) of the desynchronizer (Desy) that is can be compared with the value for the average fill level of the elastic memory (ES) of the synchronizer (Sy);
k) in a comparator (V), the average value of the fill level of the elastic memory (ES) of the desynchronizer (Desy) is compared with the average value of the fill level of the elastic memory (ES′) of the synchronizer (Sy), and a comparison signal is formed;
l) the comparison signal controls a control circuit, particularly a phase lock loop, that serves in recovering a clock signal (t_{D}*) with which the digital signal (D*) in the desynchronizer (Desy) is read out of the elastic memory (ES′).

2. A method of reducing waiting time jitter as defined in claim 1, characterized in that the average value of the fill level of the elastic memory (ES and ES′) is determined at specific points in time from the momentary value of the fill level of the memory with reference to the frame of the second digital signal (A).

3. A method of reducing waiting time jitter as defined in claim 2, characterized in that the points in time at which the momentary value of the fill level serves in determining the average value of the fill level are at the same positions in the synchronizer (Sy) and desynchronizer (Desy) in reference to the frame of the second digital signal (A).

4. A method for reducing waiting time jitter as defined in one of claims 1 through 3, characterized in that the average value of the fill level of the elastic memory (ES) of the synchronizer (Sy) is transmitted to the desynchronizer (Desy) once during each stuffing frame of the frame of the second digital signal (A).

5. A method of reducing waiting time hitter as defined in one of claims 1 through 4, characterized in that the average value of the fill level of the elastic memory (ES, ES′) is determined in the following manner:
a) when the first digital signal (D) is written into the elastic memory (ES) of the synchronizer (Sy), a write-in counter (Z1) counts at the clock rate (t_{D}) and, during reading out, a read-out counter (Z2) counts operates that counts further whenever a bit is read out, during writing into the elastic memory (ES′) of the desynchronizer (Desy), a write-in counter (Z1′) opeprates, this counter being identical to the read-out counter (Z2) of the synchronizer (Sy), and during reading out from this memory (ES′), a read-out counter (Z2′) operates with the clock signal (t_{D}*);
b) the momentary value of the fill level of the elastic memory (ES, ES′) is determined in that the counter that counts at the first clock rate (t_{D}), or the counter (Z2′) that counts with the regenerated clock signal (t_{D}*), is sampled at the second clock rate (t_{A}), and the sample values are compared with the then current state of the further counter in the synchronizer (Sy) or desynchronizer (Desy) (Z2 or Z1′), respectively;
c) a fixed number of momentary values for the fill level is accumulated, and the sum gives the average value of the fill level.

6. A method of reducing waiting time jitter as defined in claim 5, characterized in that the accumulation of the average value of the fill level is effected in steps at every nth period of pulses of the second digital signal (A).

7. A method of reducing waiting time jitter as defined in claim 5, characterized in that the accumulation of the average value of the fill level is effected by means of one-time addition in each stuffing frame of the digital signal (A).

8. A method of reducing waiting time jitter as defined in one of claims 5 through 7, characterized in that the accumulation of the average value of the fill level is effected by means of addition of every mth momentary value of the fill level.

9. A method of reducing waiting time jitter as defined in one of claims 1 through 8, characterized in that positive stuffing or positive-zero-negative stuffing, or a stuffing method that includes threshold modulation is employed.

10. A method of reducing waiting time jitter as defined in one of claims 1 through 9, characterized in that the decision of whether or not to employ stuffing is made depending on the respective average value of the fill level of the elastic memory of the synchronizer.

11. An arrangement for reducing waiting time jitter for performing the method defined in claim 1, characterized by the following features:
a) a synchronizer (Sy) is provided that includes an elastic memory (ES), into which a first digital signal (D) is read at a first bit rate that corresponds to a first clock rate (t_{D}), and from which a second digital signal (A) that corresponds to a second bit rate is read out at a second clock rate (t_{D}), further comprising a write-in counter (Z1) that counts at a first clock rate (t_{D}), a read-out counter (Z2) that continues to count when a bit is read out, a sampler (Ab) that samples the write-in counter (Z1) at the second clock rate (t_{A}), and a comparator (Σ) that compares the sample value of the state of the write-in counter (Z1) with the state of the read-out counter (Z2) and accumulates the comparison values;
b) a desynchronizer (Desy) is provided that comprises an elastic memory (ES′), a write-in counter (Z1′) which counts like the read-out counter (Z2) of the synchronizer (Sy), a read-out counter (Z2′), a sampler (Ab′) which samples the state of the readout counter (Z2′) at the second clock rate (t_{A}), a comparator (Σ′) that compares the sample value of the state of the read-out counter (Z2′) with the state of the write-in counter (Z1′) and accumulates the comparison values, and a second comparator (V) which compares the output of the comparator (Σ) with that of the comparator (Σ′), feeds the result to a filter (F), with the filtered value controls a voltage-controlled oscillator (VCO) which regenerates the clock signal (t_{D}*), at which the read-in counter (Z2′) reads;
c) a transmission line that connects the synchronizer (Sy) with the desynchronizer (Desy) and on which the second digital signal (A) is transmitted with the output of the comparator (Σ).

## Revendications

1. Procédé pour réduire la gigue du temps d'attente, comprenant les étapes suivantes:
a) un premier signal numérique (D), ayant un premier débit binaire, est inscrit à un premier rythme (t_{D}) correspondant au premier débit binaire dans une mémoire tampon (ES) d'un synchroniseur (Sy);
b) un second signal numérique (A), ayant un second débit binaire correspondant à un second rythme (t_{A}), ainsi qu'une trame prédéterminée, est extrait de la mémoire tampon (ES) du synchroniseur (Sy); et
c) une justification (bourrage) est à opérer dans le second signal numérique (A);
caractérisé en ce qu'il comprend en outre:
d) la détermination d'une mesure pour le niveau de remplissage moyen de la mémoire tampon (ES) et sa transmission à un désynchroniseur (Désy) dans la trame du second signal numérique (A);
e) la récupération dans le désynchroniseur (Désy) d'un signal numérique (D*);
f) l'inscription, dans une mémoire tampon (ES′) du désynchroniseur, de la partie du second signal numérique (A) correspondant au premier signal numérique (D) reproduit à l'intérieur du synchroniseur (Sy) dans le signal numérique (A);
g) une durée de période correspondant à la valeur réciproque du second débit binaire du second signal numérique (A) est disponible pour l'inscription d'un bit;
h) l'extraction du signal numérique (D*) de la mémoire tampon (ES′);
i) la détermination d'une mesure pour le niveau de remplissage moyen de la mémoire tampon (ES′) du désynchroniseur (Désy), qui est comparable à la mesure pour le niveau de remplissage moyen de la mémoire tampon (ES) du synchroniseur (Sy);
k) la comparaison, dans un comparateur (V), de la mesure pour le niveau de remplissage moyen de la mémoire tampon (ES) du synchroniseur (Sy) avec la mesure pour le niveau de remplissage moyen de la mémoire tampon (ES′) du désynchroniseur (Désy), ainsi que la formation d'un signal de comparaison; et
l) la commande, par le signal de comparaison, d'un circuit de réglage, en particulier d'un circuit de réglage de phase, qui sert à récupérer un rythme (t_{D}*) sous lequel le signal numérique (D*) est extrait, dans le désynchroniseur (Désy), de la mémoire tampon (ES′).

2. Procédé pour réduire la gigue du temps d'attente selon la revendication 1, caractérisé en ce que la mesure pour le niveau de remplissage moyen de la mémoire tampon (ES et ES′) est déterminée à partir de la mesure pour le niveau de remplissage instantané de la mémoire à des instants fixes par rapport à la trame du second signal numérique (A).

3. Procédé pour réduire la gigue du temps d'attente selon la revendication 2, caractérisé en ce que les instants auxquels la mesure pour le niveau de remplissage sert à déterminer la mesure pour le niveau de remplissage moyen, se trouvent aux mêmes endroits dans le synchroniseur (Sy) et le désynchroniseur (Désy) par rapport à la trame du second signal numérique (A).

4. Procédé pour réduite la gigue du temps d'attente selon une des revendications 1 à 3, caractérisé en ce que la mesure pour le niveau de remplissage moyen de la mémoire tampon (ES) du synchroniseur (Sy) est transmise au désynchroniseur (Désy) une fois dans chaque trame de justification de la trame du second signal numérique (A).

5. Procédé pour réduire la gigue du temps d'attente selon une des revendications 1 à 4, caractérisé en ce que la mesure pour le niveau de remplissage moyen de la mémoire tampon (ES, ES′) est déterminé comme suit:
a) l'inscription du premier signal numérique (D) dans la mémoire tampon (ES) du synchroniseur (Sy) s'accompagne de l'actionnement d'un compteur d'écriture (Z1) au rythme (t_{D}), l'extraction de cette mémoire (ES) s'accompagne de l'actionnement d'un compteur de lecture (Z2) qui avance chaque fois qu'un bit est extrait, l'inscription dans la mémoire tampon (ES′) du désynchroniseur (Désy) s'accompagne de l'actionnement d'un compteur d'écriture (Z1′), lequel est une reproduction exacte du compteur de lecture (Z2) du synchroniseur (Sy), et la lecture de cette mémoire (SE′) s'accompagne de l'actionnement d'un compteur de lecture (Z2′) au rythme (t_{D}*);
b) la mesure pour le niveau de remplissage instantané de la mémoire tampon (ES, ES′) est déterminée du fait que le compteur (Z1) comptant au premier rythme (t_{D}), ou le compteur (Z2′) comptant au rythme récupéré (t_{D}*), est échantillonné au second rythme (t_{A}) et les échantillons sont comparés avec la position momentanée du compteur supplémentaire (Z2 ou Z1′) dans le synchroniseur (Sy) ou le désynchroniseur (Désy); et
c) un nombre fixe de valeurs de la mesure pour le niveau de remplissage instantané est cumulé et la somme indique la mesure pour le niveau de remplissage moyen.

6. Procédé pour réduire la gigue du temps d'attente selon la revendication 5, caractérisé en ce que le cumul servant à obtenir la mesure pour le niveau de remplissage moyen s'effectue pas à pas à chaque n-ième période du rythme binaire du second signal numérique (A).

7. Procédé pour réduire la gigue du temps d'attente selon la revendication 5, caractérisé en ce que le cumul servant à obtenir la mesure pour le niveau de remplissage moyen s'effectue par une addition opérée une fois dans chaque trame de justification du signal numérique (A).

8. Procédé pour réduire la gigue du temps d'attente selon une des revendications 5 à 7, caractérisé en ce que le cumul servant à obtenir la mesure pour le niveau de remplissage moyen s'effectue par l'addition de chaque m-ième mesure pour le niveau de remplissage instantané.

9. Procédé pour réduire la gigue du temps d'attente selon une des revendications 1 à 8, caractérisé en ce que la justification est une justification positive ou une justification positive-nulle-négative ou qu'un procédé de justification avec modulation d'un ou plusieurs seuils est utilisé.

10. Procédé pour réduire la gigue du temps d'attente selon une des revendications 1 à 9, caractérisé en ce que la décision d'opérer ou non une justification, est prise en fonction de la mesure momentanée pour le niveau de remplissage moyen de la mémoire tampon du synchroniseur.

11. Dispositif de réduction de la gigue du temps d'attente pour la mise en oeuvre du procédé selon la revendication 1, caractérisé en ce que:
a) il comprend un synchroniseur (Sy) comportant une mémoire tampon (ES), dans laquelle est inscrit un premier signal numérique (D) présentant un premier débit binaire qui correspond à un premier rythme (t_{D}), et d'où est extrait un second signal numérique (A), présentant un second débit binaire qui correspond à un second rythme (t_{A}), un compteur d'écriture (Z1) comptant au premier rythme (t_{D}), un compteur de lecture (Z2) qui avance à la lecture d'un bit, un échantillonneur (Ab) qui échantillonne le compteur d'écriture (Z1) au second rythme (t_{A}), ainsi qu'un comparateur (Σ) qui compare l'échantillon de la position du compteur d'écriture (Z1) avec la position du compteur de lecture (Z2) et cumule les valeurs obtenues par les comparaisons;
b) il comprend un désynchroniseur (Désy) comportant une mémoire tampon (ES′), un compteur d'écriture (Z1′) qui compte comme le compteur de lecture (Z2) du synchroniseur (Sy), un compteur de lecture (Z2′), un échantillonneur (Ab′) qui échantillonne la position du compteur de lecture (Z2′) au second rythme (t_{A}), un comparateur (Σ′) qui compare l'échantillon de la position du compteur de lecture (Z2′) avec la position du compteur d'écriture (Z1′) et cumule les valeurs obtenues par les comparaisons, ainsi qu'un second comparateur (V) qui compare l'information délivrée à la sortie du comparateur (Σ) du synchroniseur avec l'information délivrée à la sortie du comparateur (Σ′) du désynchroniseur, envoie le résultat de cette comparaison à un filtre (F) et règle par la valeur filtrée un oscillateur commandé en tension (VCO) qui regénère le rythme (t_{D}*) auquel compte le compteur de lecture (Z2′); et
c) une ligne de transmission relie le synchroniseur (Sy) au déchroniseur (Désy), ligne sur laquelle est transmis le second signal numérique (A) ensemble avec l'information de sortie du comparateur (Σ).
